# EUROPÄISCHE PATENTSCHRIFT

(11) **EP 1 507 134 B1**
(45) Veröffentlichungstag und Bekanntmachung des Hinweises auf die Patenterteilung: **13.06.2007**
(21) Anmeldenummer: 03016535.1
(22) Anmeldetag: 23.07.2003
(51) Int. Cl.: G01J 3/46, G01N 21/25

(54) **Spektralfotometer und zugehöriger Messkopf**
Spectrophotometer and measuring head therefor
Spectrophotomètre et tête de mesure correspondante

(43) Veröffentlichungstag der Anmeldung: 16.02.2005
(73) Patentinhaber: Gretag-Macbeth AG, 8105 Regensdorf (CH)
(72) Erfinder: Frick, Beat, 8107 Buchs (CH); Schenkel, Paul, 8105 Watt (CH)
(74) Vertreter: Muschke, Markus Artur Heinz

(56) Entgegenhaltungen:
- EP-A- 0 764 836
- EP-A- 1 103 799
- EP-A- 1 314 972
- US-A1- 2002 122 192
- ASTM INTERNATIONAL: "Standard Practice for Obtaining Spectrometric Data for Object-Color Evaluation" E 1164-02, 2002, Seite 1-8 XP009022950

## Beschreibung

Die Erfindung betrifft ein Spektralfotometer gemäss dem Oberbegriff des unabhängigen Anspruchs 1 sowie einen Messkopf für ein Spektralfotometer gemäss dem Oberbegriff des unabhängigen Anspruchs 23.

Konkreter befasst sich die vorliegende Erfindung mit einem Spektralfotometer, das zum Einbau in farbtaugliche Reproduktionsgeräte, insbesondere Farbdrucker, bestimmt ist.

Zur Charakterisierung, Tintenlimitierung, Linearisierung und Profilierung von Tintenstrahlfarbdruckern werden Farbtafeln (sog. Test Charts) ausgedruckt und nachher mit einem manuellen oder automatischen Farbmessgerät ausgemessen. Als Farbmessgeräte kommen dabei Spektrometer mit 45°/0°-Geometrie zur Anwendung, die verwendeten Daten sind typischerweise L*a*b* oder spektrale Remissionen im Bereich von 380 nm bis 730 nm. Geeignete Farbmessgeräte sind beispielsweise die Geräte "Spectrolino" und "i1" der Firma Gretag-Macbeth AG, Regensdorf, Schweiz.

Tintenlimitierung und Linearisierung sind typischerweise in der Software des Drukkers enthalten, wobei gewisse Drucker z.B. der Firmen Hewlett-Packard und Xerox auch schon Einbausensoren mit Densitometerfunktionen zur automatischen Linearisierung enthalten.

ICC Profile werden bekannterweise mittels einer Color Management Software (z.B. "Profile Maker" der Firma Logo GmbH) aufgrund der Messdaten der Farbtafeln erstellt.

Tintenlimitierung, Linearisierung und Profilierung sind von verschiedenen Einflussfaktoren abhängig, z.B. Zustand des Druckkopfs, Papiertyp und Papier Batch, Tintentyp und Tinten Batch, Druck-Modus, Drucker-Registrierung, Umgebungsbedingungen wie Temperatur und Feuchtigkeit. Für die Tintenlimitierung und Linearisierung werden üblicherweise voreingestellte Parameter verwendet. Die sich aus der Streuung von Medien Batches und den Umgebungsbedingungen ergebenden Abweichungen vom Soll werden vom Profil kompensiert. Generische und voreingestellte Profile für alle möglichen Kombinationen von Medien und Druck-Moden genügen jedoch nicht oder zumindest nicht immer, weshalb in der Praxis bei höheren Qualitätsanforderungen manuell zusätzlich lokale Profile erzeugt und eingesetzt werden.

Um diese Tätigkeiten zu vereinfachen, wäre es wünschenswert, einen Farbdrucker mit einem eingebauten Messgerät zu versehen, so dass die vollständige Charakterisierung (Tintenlimitierung, Linearisierung, Profilierung) für alle Medien (Tinten, Papier) ohne zusätzliche Hilfsgeräte und manuelle Messvorgänge erfolgen kann.

Ein für diesen Einsatz geeignetes Messgerät muss sehr hohen Anforderungen genügen. Neben den üblichen Anforderungen bezüglich genormter Messgeometrie, Spektralbereich, Genauigkeit und Konstanz (Repetierbarkeit der Messergebnisse) muss es spektrale Daten, farbmetrische Daten und genormte oder spezifische Farbdichte-Daten liefern können. Diese Anforderungen sind mit den derzeit kommerziell erhältlichen Spektralfotometern, z.B. den eingangs erwähnten Geräten "Spectrolino" und "i1" der Firma Gretag-Macbeth AG durchaus zu erfüllen. Darüberhinaus bestehen aber bei einem Einbaugerät noch Einschränkungen bezüglich der Einbaumasse (kompakte Form) und ggf. des Gewichts. Ferner bestehen erhöhte Ansprüche bezüglich Umgebungsbedingungen (Temperatur, Feuchtigkeit) und Verschmutzungsgefahr in der Umgebung des Druckwerks (Staub, Farbnebel etc.). Ferner kann die Messung nicht in direktem körperlichen Kontakt mit dem Medium erfolgen, weil z.B. bei Tintenstrahldruckern der Druck noch eine gewisse Zeit feucht und mechanisch empfindlich ist. Ein Einbaugerät muss auch unempfindlich gegenüber mechanischen Erschütterungen sein und langlebige Lichtquellen aufweisen. Da der Abstand zum Messobjekt wegen des unzulässigen direkten körperlichen Kontakts mit dem Messgerät Schwankungen unterworfen ist, muss das Messgerät auch damit umgehen können. Schliesslich spielen noch Service-Freundlichkeit und kommerzielle Kriterien eine wesentliche Rolle, da solche Messgeräte in grossen Stückzahlen benötigt werden und deshalb relativ kostengünstig herstellbar sein müssen. Insbesondere ist es dazu erforderlich, dass der Zusammenbau mit geringstem Montage- und Justieraufwand erfolgen kann.

Die europäische Patentanmeldung EP 1314972 beschreibt ein Spektralphotometer mit einer mehr kanaligen Beleuchtungsanordnung. Die europäische Patentanmeldung EP 0764836 betrifft ein Colorimeter mit Elektrolumineszenzlampen.

Durch die vorliegende Erfindung soll nun ein Spektralfotometer bzw. ein Messkopf für ein Spektralfotometer geschaffen werden, das bzw. der zum Einbau in ein Farbreproduktionsgerät, insbesondere einen Drucker geeignet ist und den vorstehend beschriebenen Anforderungen genügt.

Diese der Erfindung zugrundeliegende Aufgabe wird durch den durch die Merkmale des unabhängigen Anspruchs 1 gekennzeichneten erfindungsgemässen Messkopf für ein Spektralfotometer gelöst.

Vorteilhafte Ausgestaltungen und Weiterbildungen des erfindungsgemässen Spektralfotometers und des erfindungsgemässen Messkopfs sind Gegenstand der abhängigen Ansprüche.

Im folgenden wird die Erfindung anhand der Zeichnung näher erläutert. Es zeigen:
- Fig. 1: einen Längsschnitt durch ein Ausführungsbeispiel des erfindungsgemässen Spektralfotometers,
- Fig. 2: einen Schnitt nach der Linie II-II der Fig. 1,
- Fig. 3: eine schematische Darstellung der Strahlengänge der Beleuchtungs- und der Aufpickanordnung des Spektralfotometers,
- Fig. 4: einen gegenüber der Fig. 1 um 90° gedrehten Längsschnitt durch das Spektrometergehäuse des Spektralfotometers der Fig. 1,
- Fig. 5: einen Längsschnitt analog Fig. 1, jedoch mit im Strahlengang befindlicher Hellreferenzanordnung,
- Fig. 6: die Hellreferenzanordnung der Fig. 5 in grösserer Darstellung,
- Fig. 7a-b: zwei Ansichten nach der Linie VII-VII der Fig. 1,
- Fig. 8: ein Blockschema der elektronischen Schaltung des Spektralfotometers und
- Fig. 9: ein Blockschema der Temperaturregelung für die Lichtquelle des Spektralfotometers.

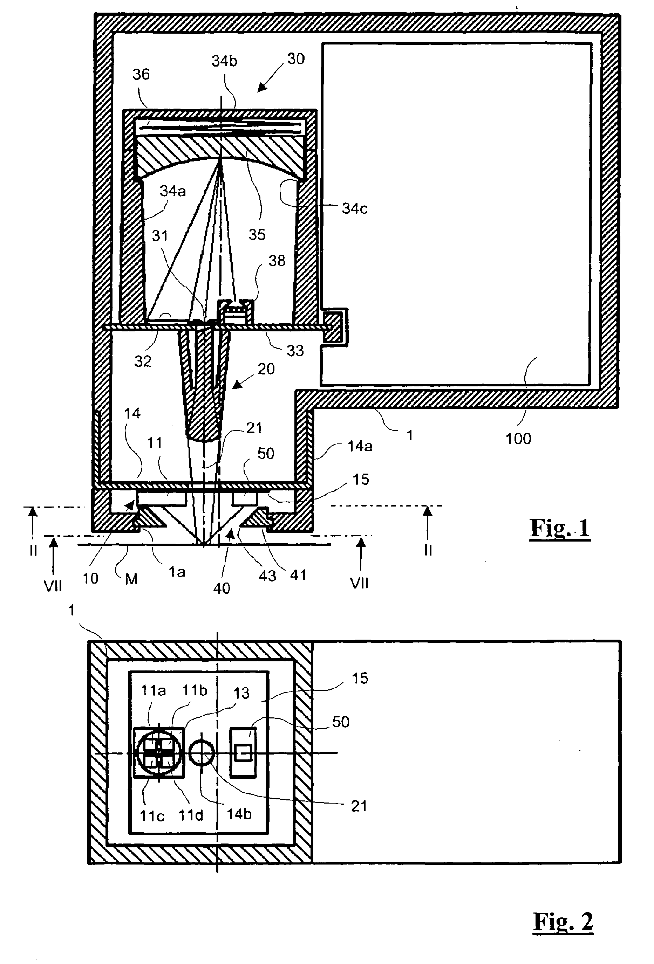

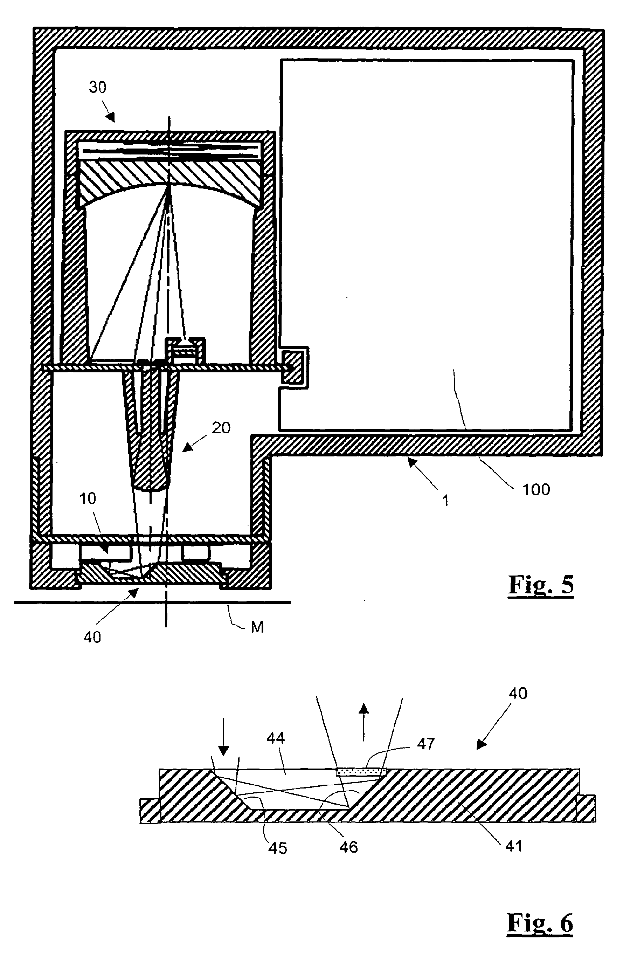

Das Spektralfotometer umfasst darstellungsgemäss ein Aussengehäuse 1, in welchem alle mechanischen, optischen und elektrischen Komponenten des Spektralfotometers untergebracht sind. Das Gehäuse 1 weist an seinem (in der Zeichnung) unteren Ende eine Öffnung 1a auf, durch welche hindurch im Betrieb der Messstrahlengang verläuft (Fig. 1). Die Öffnung 1a ist ausserhalb des Betriebs durch eine gleichzeitig als Verschluss fungierende Hellreferenzanordnung 40 verschlossen (Fig. 5). Die Messebene, in welcher sich ein zu messendes Messobjekt O im praktischen Betrieb befindet, ist mit M bezeichnet.

Die Komponenten des Spektralfotometers sind eine Beleuchtungsanordnung 10 zur Beleuchtung des in der Messebene M befindlichen Messobjekts O unter einem Einfallswinkel von im wesentlichen 45°, eine Aufpickanordnung 20 zum Auffangen des vom Messobjekt O remittierten Messlichts unter einem Ausfallswinkel von im wesentlichen 0° relativ zum Lot auf die Messebene M, eine Spektrometeranordnung 30 zur spektralen Aufspaltung des von der Aufpickanordnung 20 aufgefangenen und ihr durch einen Eintrittsspalt 31 zugeführten Messlichts, eine innerhalb der Spektrometeranordnung 30 vorgesehene, vom spektral aufgespaltenen Messlicht beaufschlagte fotoelektrische Empfängeranordnung 32 zur Umwandlung der einzelnen Spektralanteile des Messlichts in entsprechende elektrische Signale und eine elektronische Schaltung 100, welche die Beleuchtungsanordnung 10 steuert und aus den von der fotoelektrischen Empfängeranordnung 32 erzeugten elektrischen Signalen digitale Messwerte (Spektraldaten, Farbdaten, Farbdichtedaten etc.) bildet und an einer nicht dargestellten digitalen Schnittstelle für die weitere Verwendung zur Verfügung stellt.

Soweit entspricht das erfindungsgemässe Spektralfotometer in der prinzipiellen Konzeption und Funktionsweise voll und ganz herkömmlichen Spektralfotometern dieser Art, etwa dem eingangs erwähnten Gerät "i1" der Firma Gretag-Macbeth AG, so dass der Fachmann keiner näheren Erläuterung bedarf. Die Unterschiede des erfindungsgemässen Spektralfotometers gegenüber dem bekannten Stand der Technik liegen im spezifischen Aufbau der einzelnen Komponenten, welcher spezifische Aufbau es erst für den Einsatz als Einbaumessgerät für z.B. einen Drucker geeignet machen.

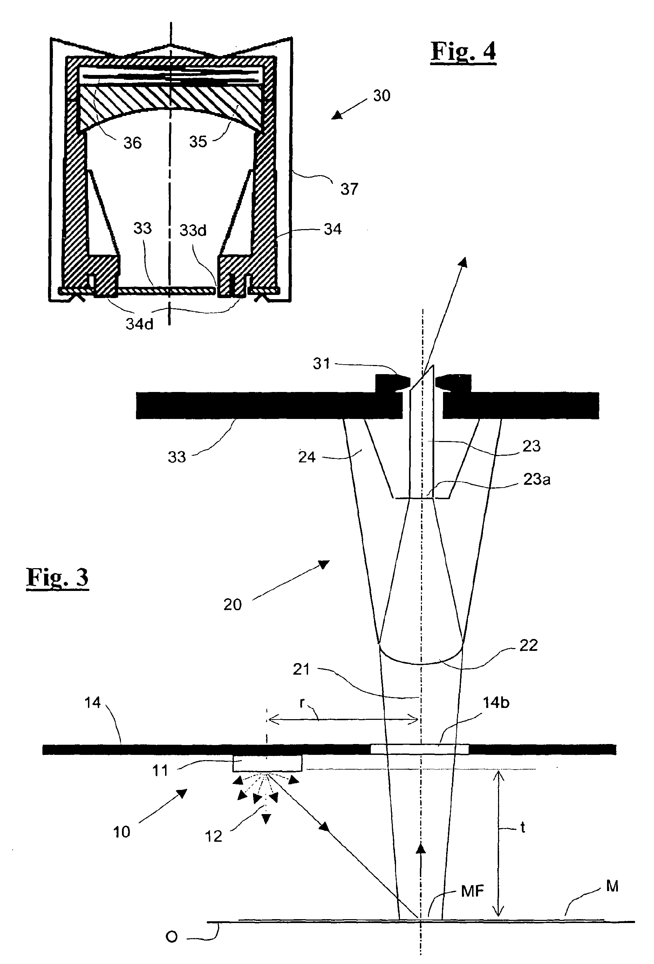

Ein erster wichtiger Aspekt der Erfindung betrifft die Konzeption der Beleuchtungsanordnung 10. Diese umfasst eine als Cosinus-Strahler ausgebildete Lichtquelle 11, worunter eine Lichtquelle verstanden wird, die ungerichtet abstrahlt, also mit einer Cosinus förmigen Streukeule in Vorwärts-Raumrichtungen. Die Fig. 3 verdeutlicht dies. Die Mitten- oder Hauptstrahlrichtung der Lichtquelle 11 ist in Fig. 3 mit 12 bezeichnet und steht normalerweise senkrecht zur Ebene der flächigen Lichtquelle 11.

Die Lichtquelle 11 ist vorzugsweise durch eine oder mehrere Leuchtdioden 11 a-11d implementiert, wie dies am besten aus der Fig. 2 erkennbar ist. Wenn nur eine Leuchtdiode oder mehrere gleiche Leuchtdioden eingesetzt ist bzw. sind, wird am besten ein "weiss" strahlender Typ verwendet, der den ganzen für die spektralen Messungen erforderlichen Spektralbereich abdeckt. Vorzugsweise wird aber eine Kombination von einer oder mehreren "weissen" Leuchtdioden mit einer oder mehreren Leuchtdioden unterschiedlicher Spektralcharakteristik eingesetzt, welche sich hinsichtlich des abzudeckenden Spektralbereichs gegenseitig ergänzen. Der gleiche Effekt kann auch durch eine Kombination von mehreren unterschiedlichen, im wesentlichen einfarbigen Leuchtdioden erreicht werden. Die Lichtquelle 11 kann auch eine UV-Leuchtdiode enthalten, die bei Bedarf separat zugeschaltet werden kann.

Die ("nackten") Leuchtdioden der Lichtquelle 11 sind auf einem gemeinsamen Träger (Chip) 13 montiert, wie dies aus Fig. 2 erkennbar ist. Dieser Träger 13 besteht vorzugsweise aus einem gut wärmeleitenden Material und sitzt auf einer Printplatte 15. Diese ist auf einer Metallplatte 14 befestigt, welche im unteren Teil des Gehäuses 1 parallel zur Messebene M angeordnet ist und gleichzeitig als Kühlfläche für die Lichtquelle 11 bzw. die sie bildenden Leuchtdioden 11a-11d dient. Die Metallplatte 14 ist zur Vergrösserung der wirksamen Kühlfläche mit seitlichen Wandteilen 14a versehen, welche an der Oberfläche des Gehäuses 1 liegen und die Wärmeableitung verbessern. Die Lichtquelle 11 ist über nicht gezeigte elektrische Leitungen mit der elektronischen Schaltung 100 verbunden und wird von dieser gesteuert, wobei auch eine selektive Ansteuerung der einzelnen Leuchtdioden 11a-11d vorgesehen sein kann.

Die flächige Lichtquelle 11 ist "flach", d.h. mit ihrer Flachseite parallel zur Messebene M (bzw. senkrecht zur optischen Achse der Aufpickanordnung 20) montiert, so dass die Mitten- bzw. Hauptstrahlrichtung 12 ebenfalls senkrecht zur Messebene M verläuft. Die Lichtquelle 11 ist ferner so auf der Metallplatte 14 angeordnet, dass der Mittenabstand r der Lichtquelle 11 vom Hauptstrahl 21 des remittierten Messlichts (optische Achse) im wesentlichen gleich gross ist wie der Abstand t der Lichtquelle 11 von der Messebene M. Der Messfleck MF in der Messebene M wird daher nur von dem im wesentlichen unter 45° in Richtung des Messflecks von der Lichtquelle 11 abgestrahlten Lichtanteil beaufschlagt, und zwar normgemäss unter einem Einfallswinkel von im wesentlichen 45°. Durch die Ausbildung der Lichtquelle 11 als Cosinus-Strahler und durch ihre vorgenannte "flache" Ausrichtung wird zwar nicht das gesamte Licht für die Beleuchtung des Messflecks ausgenutzt, dafür aber ist dieses Beleuchtungskonzept im Rahmen der üblichen Genauigkeitsanforderungen relativ unempfindlich auf Schwankungen des Abstands des Messobjekts von der Lichtquelle. Ein weiterer wichtiger Vorteil besteht darin, dass für die Beleuchtungsanordnung 10 nur wenige Bauteile erforderlich sind und diese sehr einfach und unkritisch montiert werden können. Leuchtdioden haben ferner den Vorteil grosser Robustheit und Langlebigkeit, was zur Servicefreundlichkeit des Spektralfotometers beiträgt.

Es versteht sich, dass im Bedarfsfall auch mehrere Lichtquellen 11 vorgesehen sein können, wobei diese dann längs eines Kreises um die optische Achse 21 der Aufpickanordnung 20 verteilt wären. Im Falle von mehreren Lichtquellen können auch deren spektrale Charakteristiken unterschiedlich gewählt sein. Insbesondere kann es zweckmässig sein, eine separate Lichtquelle für den UV-Bereich vorzusehen.

Ein weiterer wichtiger Aspekt der Erfindung betrifft die Konzeption der Aufpickanordnung 20 für das vom Messobjekt O remittierte Messlicht, dessen Strahlengang durch eine Öffnung 14b im Zentrum der Metallplatte 14 verläuft. Die Aufpickanordnung 20 hat die Aufgabe, das vom Messobjekt O remittierte Messlicht unter einem normgemässen Ausfallswinkel von im wesentlichen 0° relativ zum Lot auf die Messebene M aufzufangen und in den Eintrittsspalt 31 der Spektrometeranordnung 30 zu führen. Die Aufpickanordnung 20 ist als einstückiger transparenter Kunststoffkörper ausgebildet, der eine konvex gekrümmte Eintrittsfläche 22 und koaxial dazu einen im wesentlichen zylindrischen Lichtleitstab 23 sowie ein ebenfalls koaxiales konisches Montagerohr 24 aufweist. Das Montagerohr 24 hat keine optische Funktion, es dient zur Minderung von Streulicht und zur Befestigung der Aufpickanordnung an der im Gehäuse 1 ortsfest gehalterten Printplatte 33. Anstelle des Montagerohrs 24 könnten gegebenenfalls auch Spreizen oder ähnliche Befestigungsmittel vorgesehen sein.

Die konvex gekrümmte Eintrittsfläche 22 der Aufpickanordnung wirkt als Linse, welche den Messfleck MF in die Eintrittsfläche 23a des Lichtleitstabs 23 abbildet (Fig. 3). Die Abmessung der Eintrittsfläche 23a des Lichtleitstabs 23 und der Abbildungsmassstab der durch die Eintrittsfläche 22 gebildeten Linse definieren die Abmessung des von der Aufpickanordnung 20 effektiv "gesehenen" Messflecks MF (typischerweise etwa 4 mm ∅). Die Beleuchtungsanordnung 10 beaufschlagt dabei einen grösseren, über den Messfleck MF hinausgehenden Bereich des Messobjekts ("Überbeleuchtung").

Der Lichtleitstab 23 wirkt als Integrator über die gesamte Fläche des Messflecks MF und gleicht so Inhomogenitäten aus. Er leitet das aufgepickte und in ihn eingespeiste Messlicht in den Eingangsspalt 31 der Spektrometeranordnung 30. Er ist ausgangsseitig etwas abgeschrägt, um die in der Spektrometeranordnung für eine optimale Ausleuchtung erforderliche leichte Ablenkung des Messlichts von der optischen Achse zu erreichen.

Die Aufpickanordnung 20 besteht vorzugsweis nur aus einem einzigen, leicht z.B. im Spritzguss herstellbaren Bauteil, das sehr einfach im Spektralfotometer montiert werden kann. Sie begrenzt den Messfleck und gleicht Inhomogenitäten aus, so dass an die Beleuchtungsanordnung diesbezüglich keine Anforderungen gestellt sind und diese dadurch wiederum sehr einfach realisiert sein kann.

Ein weiterer wichtiger Aspekt der Erfindung betrifft die Ausbildung der Spektrometeranordnung 30. Diese umfasst in an sich konventioneller Weise ein lichtdichtes Spektrometergehäuse 34, dessen einzige Öffnung der schon erwähnte Eintrittsspalt 31 ist. Im Spektrometergehäuse 34 befindet sich ein konkaves Beugungsgitter 35 und die ebenfalls schon erwähnte fotoelektrische Empfängeranordnung 32, welche typischerweise aus einer Fotodiodenzeile mit z.B. 128 einzelnen Fotodioden besteht und auf der ebenfalls schon erwähnten Printplatte 33 montiert ist. Das von der Aufpickanordnung 20 aufgefangene und durch den Eintrittsspalt 31 in die Spektrometeranordnung 30 eingeführte Messlicht fällt auf das Beugungsgitter 35 und wird von diesem in seine Spektralanteile aufgespalten. Das spektral aufgespaltene Messlicht beaufschlagt die fotoelektrische Empfängeranordnung 32 und wird von dieser in entsprechende elektrische Signale umgewandelt, wobei an jeder einzelnen Fotodiode ein anderer Spektralanteil abgreifbar ist. Die fotoelektrische Empfängeranordnung ist zu diesem Zweck am Ort der Beugung erster Ordnung platziert. Die von den einzelnen Fotodioden der fotoelektrischen Empfängeranordnung 32 erzeugten elektrischen Signale werden über nicht dargestellte Leitungen der elektronischen Schaltung 100 zugeführt und dort in an sich bekannter Weise aufbereitet und digitalisiert und zu den benötigten digitalen Messwerten (Spektralmesswerte, Farbmesswerte, Farbdichtemesswerte etc.) verarbeitet.

Das Spektrometergehäuse 34 ist topfförmig ausgebildet und umfasst einen im wesentlichen etwa zylindrischen Mantel 34a und einen darauf abnehmbar befestigten Deckel 34b. An der Innenseite des Mantels 34a ist eine Ringschulter 34c vorgesehen, auf der das Beugungsgitter 35 mit seinem Rand aufliegt. Die Ringschulter 34c ist dabei ballig gegengleich zum konkaven Rand des Beugungsgitters 35 geformt, so dass sich eine saubere Auflage ergibt. Zwischen dem Deckel 34b und dem Beugungsgitter 35 besteht ein kleiner Hohlraum, in welchem sich eine Druckfeder 36 befindet. Diese stützt sich an der Innenseite des Deckels 34b ab und presst das Beugungsgitter mit definierter konstanter Kraft gegen die Ringschulter 34c. Das Beugungsgitter 35 ist koaxial zum Mantel 34a angeordnet. Letzteres bedingt, dass der Eintrittsspalt 31 ausserhalb der optischen Achse des Beugungsgitters 35 liegt und der aus dem Eintrittsspalt 31 austretende Messlichtstrahl zur optischen Achse etwas geneigt ist. Gleichzeitig muss die fotoelektrische Empfängeranordnung 32 auf derselben Seite der optischen Achse des Beugungsgitters 35 angeordnet sein wie der Eintrittsspalt. Die optische Achse der Aufpickanordnung 20 ist also zur optischen Achse des Beugungsgitters 35 etwas versetzt.

Das topfförmige Spektrometergehäuse 34 sitzt auf der schon erwähnten Printplatte 33 und ist durch diese an seiner dem Deckel 34b gegenüberliegenden Unterseite lichtdicht verschlossen. Der Eintrittsspalt 31 ist entweder durch einen entsprechenden Schlitz in der Printplatte 33 gebildet oder vorzugsweise, wie dargestellt, durch ein separates, auf der Printplatte 33 über einer passenden Durchlassöffnung in derselben montiertes Spaltelement implementiert. An der Innenseite des Mantels 34a sind nach unten vorspringende Zapfen 34d angeformt, welche in entsprechende Ausnehmungen 33d in der Printplatte 33 hineinragen. Die Zapfen 34d und die Ausnehmungen 33d bilden zusammenwirkende komplementäre Positionierungsorgane, welche das Spektrometergehäuse 34 auf der Printplatte 33 zentrieren. Ein Paar von zusammenwirkenden Positionierungsorganen ist als Festlager ausgelegt, das andere als Gleitlager. Die das Fest- und das Gleitlager verbindende Linie steht senkrecht zu der Dispersionsrichtung des Spektrometers (sichtbar in Fig. 4) und bleibt bei Temperaturschwankungen, d. h. bei unterschiedlicher Ausdehnung von Spektrometer (Spektrometergehäuse und Beugungsgitter) und Printplatte (Keramik mit geringem Wärmeausdehnungskoeffizienten) unverändet. Die Linienposition und -richtung ist, wie z.B. in der EP-A 1 041 372 beschrieben, so festgelegt, dass bei einer z. B. durch Temperaturerhöhung bedingten Wämeausdehnung des Spektometers, des Gitters und der Printplatte sich die Lage des Spektrums auf dem Detektor 32 nicht verändert. Das Spektrometer ist damit isothermalisiert durch die richtige Wahl der Lage der beiden Positionierungsorgane.

Das Spektrometergehäuse 34 wird auf der Printplatte 33 mittels einer Spannfeder 37 festgehalten, welche einerseits den Deckel 34b übergreift und anderseits die Printplatte 33 hintergreift, wie dies aus Fig. 4 ersichtlich ist. Durch die Spannfeder 37 wird gleichzeitig auch der Deckel 34b auf dem Mantel 34a des Spektrometergehäuses 34 festgehalten. Da das Spektrometergehäuse nicht fest mit der Printplatte verbunden ist, sondern nur mit einer definierten Kraft auf die Printplatte gepresst wird, können sich das Spektrometergehäuse und die Printplatte ungehindert unterschiedlich thermisch ausdehnen, wobei das Spektrometergehäuse auf der sehr glatten Oberfläche der Keramik-Printplatte gleiten kann.

Die gezeigte Ausbildung der Spektrometeranordnung 30 erlaubt eine extrem einfache Herstellung (z.B. als Kunststoff-Spritzgussteile) und erfordert insbesondere keine Justierung. Die Printplatte 33 besteht vorzugsweise aus einem Keramik-Material und ist damit geringen und definierten thermisch bedingten Massänderungen (Ausdehnung) unterworfen. Die Positionierung aller kritischen Teile orientiert sich ausschliesslich an der Printplatte 33 und kann durch entsprechend präzis geformte und angeordnete Positionierungshilfen an der Printplatte ohne nachträgliche Justierung einfach gewährleistet werden.

Für manche messtechnischen Aufgaben kann es erforderlich sein, dass gesamte, also nicht spektral aufgespaltene Messlicht zu erfassen. Zu diesem Zweck ist in der Spektrometeranordnung 30 auf der Printplatte 33 am Ort der Beugung nullter Ordnung ein weiterer fotoelektrischer Empfänger 38 angeordnet und ebenfalls mit der elektronischen Schaltung 100 verbunden. Dieser Fotoempfänger 38 kann optional auch mit einem Konversionsfilter ausgestattet sein, was die Messung in metrischen Daten (z.B. Lux) ermöglicht.

Jedes nicht oder nicht perfekt isothermalisierte Spektrometer hat aufgrund von Materialeigenschaften (thermische Ausdehnung, Feuchtigkeit) eine gewisse spektrale Drift. Diese Drift kann in an sich bekannter Weise mittels einer spektral stabilen Referenzlichtquelle rechnerisch kompensiert werden. Vorzugsweise wird als Referenzlichtquelle eine schmalbandige Leuchtdiode in Verbindung mit einem temperaturstabilen dichroitischen Filter eingesetzt. Die Einkoppelung des Referenzlichts kann auf verschiedene Weise erfolgen. Am einfachsten lässt sich das Referenzlichtquelle als zusätzliche Messlichtquelle realisieren, das Referenzlicht wird in diesem Falle über die Hellreferenzanordnung in das Spektrometer eingebracht. Vorzugsweise ist die Referenzlichtquelle jedoch innerhalb des Spektrometergehäuses nahe beim Eintrittsspalt 31 angeordnet.

In anderen messtechnischen Anwendungen ist es wünschenswert, das vom Messobjekt direkt reflektierte Licht (Glanz) zu erfassen. Zu diesem Zweck ist auf der Metallplatte 14 bezüglich der optischen Achse 21 der Aufpickanordnung symmetrisch gegenüber der Lichtquelle 11 ein weiterer Fotoempfänger 50 angeordnet, welcher das vom Messobjekt unter einem normgemässen Ausfallswinkel von im wesentlichen 45° reflektierte Messlicht empfängt. Auch dieser Fotoempfänger 50 ist mit der elektronischen Schaltung 100 verbunden. Optional kann im Strahlengang des Fotoempfängers 50 auch ein Filter eingesetzt sein, das das Spektrum des beobachteten Glanzes bestimmen kann.

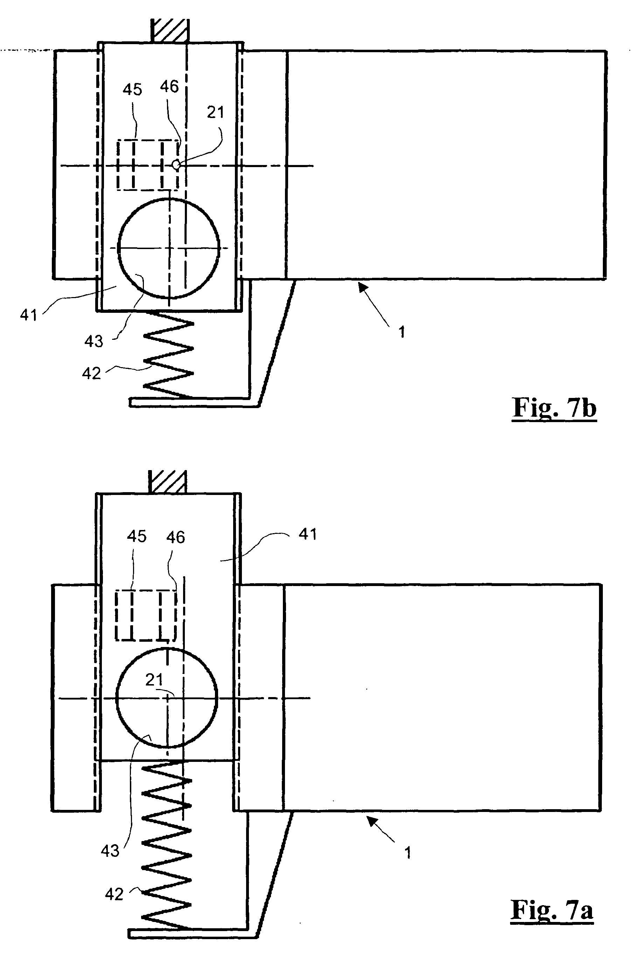

Anstelle der üblichen Weisskachel ist gemäss einem weiteren Aspekt der Erfindung die schon weiter vorne erwähnte Hellreferenzanordnung 40 vorgesehen, welche in einem relativ grossen Abstand von typischerweise etwa 2 mm oberhalb der Messebene M angeordnet ist. Die Hellreferenzanordnung besteht im wesentlichen aus einem Schlitten 41, der in der Öffnung 1 a des Aussengehäuses 1 quer zur optischen Achse 21 der Aufpickanordnung 20 zwischen einer Messposition und einer Referenzposition verschiebbar ist, wie dies aus den beiden Figuren 7a (Messposition) und 7b (Referenzposition) ersichtlich ist. Die Verschiebung in die Referenzposition erfolgt beispielsweise durch ein äusseres, hier nicht dargestelltes Antriebsorgan entgegen der Kraft einer Feder 42, welche den Schlitten 41 in Messposition hält bzw. bei Wegfallen der äusseren Krafteinwirkung in die Messposition zurückbewegt. Das äussere Antriebsorgan kann z.B. in dem Gerät vorgesehen sein, in welchem das Spektralfotometer als Einbaugerät eingesetzt ist.

Der Schlitten 41 ist mit einer kreisförmigen Durchlassöffnung 43 versehen, deren Mittelpunkt in Messposition des Schlittens 41 im wesentlichen in der optischen Achse 21 der Aufpickanordnung 20 liegt (Fig. 7a). Die Durchlassöffnung 43 ist ausreichend gross bemessen, so dass das Beleuchtungslicht und das vom Messobjekt remittierte Messlicht ungehindert passieren können (Fig. 1).

Wie die Fig. 6 in grösserem Detail zeigt, weist der Schlitten 41 an seiner Oberseite einen Hohlraum 44 auf, der seitlich durch zwei Umlenkspiegel 45 und 46 begrenzt ist. Oberhalb des in der Zeichnung rechten Umlenkspiegels 46 ist ein Abschwächelement 47 z.B. in Form einer Streuscheibe oder eines Graufilters angeordnet. Der Hohlraum 44 ist bezüglich der Durchlassöffnung 43 seitlich und in Verschieberichtung des Schlittens 41 versetzt. Bei in der Referenzposition befindlichem Schlitten 41 verläuft die optische Achse 21 der Aufpickanordnung 20 im wesentlichen durch die Mitte des Umlenkspiegels 46, und die Lichtquelle 11 befindet sich im wesentlichen über der Mitte des Umlenkspiegels 45 (Fig. 5). Das von der Lichtquelle 11 kommende Licht tritt in den Hohlraum 44 ein, wird durch die beiden Umlenkspiegel 45 und 46 um insgesamt 180° umgelenkt und verlässt den Hohlraum durch das Abschwächelement 47 in Richtung zur Aufpickanordnung 20. Das Abschwächelement 47 dient zum Ausgleich der Intensitätsverhältnisse von der Messung auf dem Papierweiss zu der Hellmessung.

In einer einfacheren Bauform kann der gesamte Hohlraum 44 aus einem optisch diffus streuendem Kunststoff gebildet sein. Das über die beiden 45° geneigten Flächen in die Pickup Optik gestreute Licht wird in diesem Falle während der Hellmessung erfasst.

Im Gegensatz zu einer Weissmessung mit einer wohl definierten Weisskachel in der exakten Messhöhe (Papierebene) sind die beschriebenen Hellmessungen Relativmessungen der Kombination von spektalen LED Helligkeiten, Sensorempfindlichkeit, etc. Im Minimum bei der Produktion des Sensors ist eine Absolut-Weisskalibration des gesamten Systems nach Norm erforderlich.

Wie sich aus dem Vorstehenden ergibt, ist das Spektralfotometer bei in Referenzposition befindlichem Schlitten 41 nach aussen abgeschlossen. Die Hellreferenzanordnung 40 fungiert also gleichzeitig auch als mechanischer und optischer Verschluss (letzterer z.B. für Dunkelmessungen). Durch die beschriebene Ausbildung der Hellreferenzanordnung 40 ist diese ausserdem gegen Verschmutzung geschützt. Ferner bleibt der Freiraum zwischen dem Spektralfotometer und dem Messobjekt erhalten und die Hellreferenzanordnung findet innerhalb des umbauten Raums des Spektralfotometers Platz.

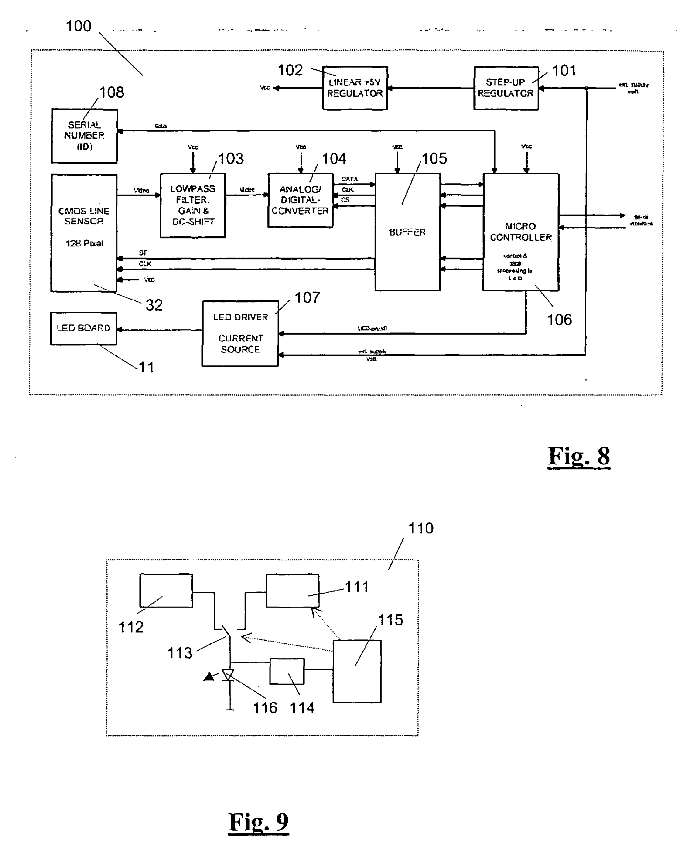

In Fig. 8 sind die wichtigsten Funktionselemente der elektronischen Schaltung 100 des Spektralfotometers blockschematisch dargestellt. Die Schaltung umfasst neben Stromversorgungen 101 und 102 eine Verstärker- und Pegelwandlerstufe 103, einen A/D-Wandler 104, einen Pufferspeicher 105, einen Microcontroller 106 und einen Lampentreiber 107 sowie einen Seriennummerspeicher 108. Die fotoelektrische Empfängeranordnung 32 ist mit ihren Signalausgängen an die Verstärker- und Pegelwandlerstufe 103 angeschlossen. Der Lampentreiber 107 speist die Leuchtdioden der Lichtquelle 11. Falls das Spektralfotometer, wie vorstehend beschrieben, mit zusätzlichen Fotoempfängern oder zusätzlichen Lichtquellen ausgestattet ist, sind diese in analoger Weise schaltungstechnisch eingebunden. Die Steuerung der einzelnen Funktionselemente und der Funktionsabläufe erfolgt durch die im Microcontroller 106 abgelegte Software. Die elektronische Schaltung ist in ihrem prinzipiellen Aufbau und in ihrer Wirkungsweise Stand der Technik (vgl. z.B. das schon erwähnte Spektralfotometer "i1") und bedarf deshalb für den Fachmann keiner näheren Erläuterung.

Für ein Spektralfotometer ist eine stabile Lichtquelle von grösster Bedeutung. Bei einer herkömmlichen Beleuchtung mit einer Glühlampe als Lichtquelle lässt sich dieses Problem relativ einfach u.a. durch eine stabile Stromversorgung lösen. Wenn jedoch Leuchtdioden als Lichtquellen eingesetzt werden, ist die Stabilität selbst kurzzeitig oftmals ungenügend. Für stabile Verhältnisse ist es erforderlich, dass die Leuchtdioden mit konstantem Strom und konstanter Temperatur betrieben werden. Letzteres ist sehr schwierig, weil die Temperatur einer Leuchtdiode nicht ohne weiteres z.B. mit einem Temperatursensor gemessen werden kann. Dieses Problem wird nun gemäss einem weiteren wichtigen Aspekt der Erfindung so gelöst, dass als Mass für die Leuchtdiodentemperatur die (definiert temperaturabhängige) Durchflussspannung (Vorwärtsspannung) der Leuchtdiode bei einem gegenüber dem normalen Betriebsstrom (typischerweise 170-350 mA) wesentlich geringeren konstanten Messtrom (typischerweise 50 µA) gemessen und zur Temperatursteuerung herangezogen wird. (Diese Messung erfolgt selbsverständlich in der Pause zwischen zwei Messungen).

Wenn die Durchflussspannung steigt, was einem Abfall der Leuchtdiodentemperatur entspricht, wird die Einschaltdauer der Leuchtdiode beim eigentlichen Messbetrieb des Spektralfotometers etwas erhöht, wodurch die Temperatur wieder ansteigt. Bei einem Anstieg der Temperatur wird umgekehrt die Einschaltdauer pro Messung etwas erniedrigt oder die Pause zwischen zwei aufeinanderfolgenden Messungen etwas verlängert. Auf diese Weise kann die Temperatur der Leuchtdiode relativ einfach konstant gehalten werden. Insbesondere ist dazu praktisch kein schaltungstechnischer Mehraufwand erforderlich, da mit Ausnahme der einfachen Messstromquelle alle erforderlichen Komponenten (A/D-Wandler, Lampentreiber, Mikroprozessor) in einem modernen digitalen Spektralfotometer ohnehin vorhanden sind (vgl. vorstehende Beschreibung der elektronischen Schaltung 100).

Wenn die Lichtquelle mehrere Leuchtdioden enthält, wird praktischerweise die Temperatur nur derjenigen Leuchtdiode gemessen, die den grössten Lichtbeitrag liefert. Selbstverständlich kann aber auch die Spannung und damit die Temperatur an jeder Leuchtdiode gemessen werden.

Die Fig. 9 zeigt ein Prinzipschaltbild einer geeigneten Regelschaltung 110. Diese umfasst eine schaltbare Betriebskonstantstromquelle 111, eine Messkonstantstromquelle 112, einen Umschalter 113, einen A/D-Wandler 114 und einen Microcontroller 115. Der Microcontroller steuert die Betriebskonstantstromquelle 111 und den Umschalter 113. Der A/D-Wandler 114 liegt an der Anode der zu regelnden Leuchtdiode 116 und erfasst deren Durchflussspannung, wenn die Leuchtdiode 116 über den Umschalter 113 an die Messkonstantstromquelle 112 angeschlossen ist. Der Microcontroller 115 errechnet aufgrund der erfassten Durchflussspannung die erforderliche Einschalt- bzw. Pausenzeit für die Leuchtdiode 116 und steuert die Betriebskonstantstromquelle 111 entsprechend. Wie man erkennt, sind mit Ausnahme der Messkonstantstromquelle 112 alle Komponenten der Regelschaltung 110 schon in der elektronischen Schaltung 100 vorhanden. Es braucht im wesentlichen lediglich die Software des Microcontrollers entsprechend erweitert zu werden.

Anstelle die Temperatur der Leuchtdioden konstant zu halten, können alternativ auch die spektralen Messdaten entsprechend temperaturkorrigiert werden. Hierzu wird bei jeder gemessenen Temperatur ein Referenzspektrum gemessen und abgespeichert. Mit diesen Referenzspektren können später die Messwerte korrigiert werden. Diese Vorgehensweise erfordert jedoch einen deutlich höheren Speicher- und Rechenaufwand, belastet dafür aber die Leuchtdioden etwas weniger.

Das erfindungsgemässe Spektralfotometer kann dank seiner speziellen Bauweise und Merkmale sehr kompakt und kostengünstig realisiert werden und ist insbesondere zum Einsatz in Tintenstrahldruckern (von einfachen Büro-Modellen bis zu ganz grossen Formaten), Farbsublimationsdruckern, Farbkopiergeräten und auch sonstigen Produktionsmaschinen, wo Farbe ein qualitätsbestimmendes Merkmal ist, z.B. bei Druckmaschinen, geeignet. Es lässt sich dort für alle Messaufgaben, bei denen Spektral-, Farb- und Dichtemessdaten bestimmt werden müssen, einsetzen. Die dabei gewonnenen Messdaten können dann für die vielfältigsten Aufgaben, insbesondere auch die eingangs erwähnte Charakterisierung der Drucker, ausgewertet werden.

## Patentansprüche

1. Messkopf für ein Spektralfotometer, mit einer mindestens eine flächige Lichtquelle (11) aufweisenden Beleuchtungsanordnung (10) zur Beleuchtung eines in einer Messebene (M) befindlichen Messobjekts (O) unter einem Einfallswinkel von im wesentlichen 45°, mit einer Aufpickanordnung (20) zum Auffangen des vom Messobjekt remittierten Messlichts unter einem Ausfallswinkel von im wesentlichen 0° relativ zum Lot auf die Messebene, mit einer einen Eintrittsspalt (31) aufweisenden Spektrometeranordnung (30) zur spektralen Aufspaltung des aufgefangenen und ihr durch den Eintrittsspalt (31) zugeführten Messlichts und mit einer vom spektral aufgespaltenen Messlicht beaufschlagten fotoelektrischen Empfängeranordnung (32) zur Umwandlung der einzelnen Spektralanteile des Messlichts in entsprechende elektrische Signale, **dadurch gekennzeichnet, dass** die mindestens eine flächige Lichtquelle (11) als Cosinus-Strahler ausgebildet und so angeordnet ist, dass die zur Ebene der flächigen Lichtquelle (11) senkrechte Hauptstrahlungsrichtung (12) des Cosinus-Strahlers (11) parallel zum Hauptstrahl (21) des remittierten Messlichts verläuft und der Mittenabstand (r) des Cosinus-Strahlers (11) vom Hauptstrahl des remittierten Messlichts im wesentlichen gleich groß ist wie der Abstand (t) des Cosinus-Strahlers (11) von der Messebene (M).

2. Spektralfotometer mit einem Messkopf nach Anspruch 1, das weiter aufweist: eine elektronische Schaltung (100), welche die Lichtquelle (11) steuert und aus den von der fotoelektrischen Empfängeranordnung (32) erzeugten elektrischen Signalen digitale Messwerte bildet.

3. Spektralfotometer nach Anspruch 2, **dadurch gekennzeichnet, dass** die Lichtquelle (11) eine Kombination von zwei oder mehreren in einer Ebene und vorzugsweise auf einem gemeinsamen Träger (13) angeordneten Leuchtdioden (11a-d) unterschiedlicher spektraler Charakteristiken umfasst, wobei die Ebene im wesentlichen parallel zur Messebene (M) ausgerichtet ist.

4. Spektralfotometer nach einem der Ansprüche 2 oder 3, **dadurch gekennzeichnet, dass** die Aufpickanordnung (20) eine Linse (22) und einen Integratorstab (23) aufweist, wobei die Linse einen begrenzten Messfleck (MF) in der Messebene (M) auf die Eintrittsfläche (23a) des Integratorstabs (23) abbildet und der Integratorstab das Messlicht über den Messflecks (MF) integriert und in den Eintrittsspalt (31) der Spektrometeranordnung (30) lenkt.

5. Spektralfotometer nach Anspruch 4, **dadurch gekennzeichnet, dass** die Linse (22) und der Integratorstab (23) einstückig ausgebildet sind.

6. Spektralfotometer nach einem der Ansprüche 2 bis 5, **dadurch gekennzeichnet, dass** es eine in den Strahlengang zwischen der Beleuchtungsanordnung (10) und der Aufpickanordnung (20) einbringbare und wieder entfernbare, in einem relativ grossen Abstand zur Messebene (M) befindliche Hellreferenzanordnung (40) aufweist, welche zumindest einen Teil des Beleuchtungslichts in die Aufpickanordnung (20) zurück reflektiert.

7. Spektralfotometer nach Anspruch 6, **dadurch gekennzeichnet, dass** die Hellreferenzanordnung (40) durch Umlenkspiegel (45,46) und mindestens ein Abschwächungselement (47) gebildet ist.

8. Spektralfotometer nach Anspruch 6, **dadurch gekennzeichnet, dass** die Hellreferenzanordnung (40) durch diffus streuende Flächen gebildet ist.

9. Spektralfotometer nach einem der Ansprüche 6 bis 8, **dadurch gekennzeichnet, dass** die Hellreferenzanordnung (40) als Verschluss ausgebildet ist.

10. Spektralfotometer nach einem der Ansprüche 2 bis 9, **dadurch gekennzeichnet, dass** die Spektrometeranordnung (30) ein im wesentlichen topfförmiges Spektrometergehäuse (34) mit einem im wesentlichen zylindrischen Mantel (34a) und einem abnehmbaren Deckel (34b) aufweist, dass im Spektrometergehäuse ein konkaves Beugungsgitter (35) koaxial zum Mantel (34a) angeordnet ist und auf einer am Mantel (34a) ausgebildeten und vorzugsweise komplementär zum Beugungsgitter geformten Ringschulter (34c) aufliegt, und dass der Deckel (34b) das Beugungsgitter (35) über eine Druckfeder (36) mit definierter Kraft gegen die Ringschulter (34c) presst.

11. Spektralfotometer nach Anspruch 8, **dadurch gekennzeichnet, dass** das Spektrometergehäuse (34) mit seiner dem Deckel (34b) gegenüberliegenden Seite auf einer den Eintrittsspalt (31) und die fotoelektrische Empfängeranordnung (32) enthaltenden Printplatte (33) positioniert und durch diese abgeschlossen ist.

12. Spektralfotometer nach Anspruch 9, **dadurch gekennzeichnet, dass** der Mantel (34a) des Spektrometergehäuses (34) mit Positionierungsorganen (34d) ausgestattet ist, die in an der Printplatte (33) ausgebildete komplementäre Postionierungsorgane (33d) eingreifen.

13. Spektralfotometer nach einem der Ansprüche 11 bis 12, **dadurch gekennzeichnet, dass** eine Spannfeder (37) vorgesehen ist, welche einerseits den Deckel (34b) am Mantel (34a) des Spektrometergehäuses (34) fixiert und anderseits das Spektrometergehäuse (34) an der Printplatte (33) festhält.

14. Spektralfotometer nach einem der Ansprüche 10 bis 13, **dadurch gekennzeichnet, dass** es athermalisiert ist.

15. Spektralfotometer nach einem der Ansprüche 10 bis 13, **dadurch gekennzeichnet, dass** das Spektrometergehäuse (34) und das darin befindliche Beugungsgitter (35) aus Material mit demselben thermischen Ausdehnungskoeffizient bestehen, so dass durch unterschiedliche Wärmedehnung hervorgerufene Relativbewegungen nur zwischen dem Spektrometergehäuse (34) als Ganzem und der Printplatte (33) erfolgen können.

16. Spektralfotometer nach einem der Ansprüche 8 bis 11, **dadurch gekennzeichnet, dass** der Eintrittsspalt (31) und die fotoelektrische Empfängeranordnung (32) exzentrisch auf derselben Seite ausserhalb der optischen Achse des Beugungsgitters (35) angeordnet sind.

17. Spektralfotometer nach einem der Ansprüche 8 bis 12, **dadurch gekennzeichnet, dass** im Spektrometergehäuse (34) ein zusätzlicher fotoelektrischer Empfänger (38) vorgesehen und so angeordnet ist, dass er vom Beugungsgitter (35) mit Messlicht der nullten Ordnung beaufschlagt wird.

18. Spektralfotometer nach einem der Ansprüche 9 bis 13, **dadurch gekennzeichnet, dass** die Aufpickanordnung (20) direkt an der dem Spektrometergehäuse (34) gegenüberliegenden Seite der Printplatte (33) montiert ist.

19. Spektralfotometer nach einem der Ansprüche 8 bis 14, **dadurch gekennzeichnet, dass** das Spektrometergehäuse (34) und das Beugungsgitter (35) aus demselben Kunststoff bestehen und vorzugsweise im Spritzgussverfahren hergestellt sind.

20. Spektralfotometer nach einem der Ansprüche 2 bis 19, **dadurch gekennzeichnet, dass** ein bezüglich des Hauptstrahls (21) der Aufpickanordnung (20) axialsymmetrisch zur Lichtquelle (11) angeordneter weiterer fotoelektrischer Empfänger (50) vorgesehen ist, welcher vom Messobjekt unter einem Ausfallswinkel von im wesentlichen 45° direkt reflektiertes Licht empfängt.

21. Spektralfotometer nach einem der Ansprüche 2 bis 20, **dadurch gekennzeichnet, dass** eine Regelung (110) zur Konstanthaltung der Temperatur der Lichtquelle (11) vorhanden ist.

22. Spektralfotometer nach Anspruch 3 oder 17, **dadurch gekennzeichnet, dass** die Regelung (110) als Mass für die Temperatur der in der Lichtquelle (11) enthaltenen Leuchtdiode(n) deren Durchflussspannung bei einem gegenüber dem normalen Betriebsstrom sehr viel kleineren konstanten Messstrom ermittelt.

23. Spektralfotometer nach Anspruch 18, **dadurch gekennzeichnet, dass** die Regelung (110) die Temperatur der Leuchtdioden durch Variation der Ein- und Ausschaltdauer in Abhängigkeit von der ermittelten Durchflussspannung regelt.

## Claims

1. Measuring head for a spectral photometer, comprising an illumination arrangement (10) with at least one planar light source (11) for illuminating a measurement object (O) located in a measurement plane (M) at an angle of incidence of essentially 45°, comprising a pickup arrangement (20) for capturing the measurement light remitted by the measurement object at an angle of reflection of essentially 0° relative to the perpendicular to the measurement plane, comprising a spectrometer arrangement (30) with an entry aperture (31) for spectrally splitting the captured measurement light fed to it through the entry aperture (31), and comprising a photoelectric receiver arrangement (32) exposed to the spectrally split measurement light for converting the individual spectral components of the measurement light into corresponding electrical signals, **characterised in that** the at least one planar light source (11) is designed as a cosine emitter and is arranged in such a way that the main emission direction (12) of the cosine emitter (11), which is perpendicular to the plane of the planar light source (11), runs parallel to the main beam (21) of the remitted measurement light and the mean distance (r) of the cosine emitter (11) from the main beam of the remitted measurement light is essentially the same as the distance (t) of the cosine emitter (11) from the measurement plane (M).

2. Spectral photometer with a measuring head according to claim 1, which further comprises: an electronic circuit (100) which controls the light source (11) and forms digital measurement values from the electrical signals generated by the photoelectric receiver arrangement (32).

3. Spectral photometer according to claim 2, **characterised in that** the light source (11) comprises a combination of two or more light-emitting diodes (11a-d) of different spectral characteristics which are arranged in one plane and preferably on a common support (13), wherein the plane is oriented essentially parallel to the measurement plane (M).

4. Spectral photometer according to one of claims 2 or 3, **characterised in that** the pickup arrangement (20) comprises a lens (22) and an integrator rod (23), wherein the lens images a limited measurement spot (MF) in the measurement plane (M) onto the entry surface (23a) of the integrator rod (23) and the integrator rod integrates the measurement light over the measurement spot (MF) and deflects it into the entry aperture (31) of the spectrometer arrangement (30).

5. Spectral photometer according to claim 4, **characterised in that** the lens (22) and the integrator rod (23) are formed in one piece.

6. Spectral photometer according to one of claims 2 to 5, **characterised in that** it comprises a bright reference arrangement (40) which can be brought into the beam path between the illumination arrangement (10) and the pickup arrangement (20) and then removed again therefrom and which is located at a relatively large distance from the measurement plane (M), which bright reference arrangement reflects at least a portion of the illumination light back into the pickup arrangement (20).

7. Spectral photometer according to claim 6, **characterised in that** the bright reference arrangement (40) is formed by deflecting mirrors (45, 46) and at least one attenuation element (47).

8. Spectral photometer according to claim 6, **characterised in that** the bright reference arrangement (40) is formed by diffusely scattering surfaces.

9. Spectral photometer according to one of claims 6 to 8, **characterised in that** the bright reference arrangement (40) is designed as a shutter.

10. Spectral photometer according to one of claims 2 to 9, **characterised in that** the spectrometer arrangement (30) comprises an essentially pot-shaped spectrometer housing (34) with an essentially cylindrical casing (34a) and a removable cover (34b), **in that** a concave diffraction grating (35) is arranged in the spectrometer housing coaxially with respect to the casing (34a) and rests on an annular shoulder (34c) which is formed on the casing (34a) and is preferably shaped in a manner complementary to the diffraction grating, and **in that** the cover (34b) presses the diffraction grating (35) against the annular shoulder (34c) with a defined force by way of a pressure spring (36).

11. Spectral photometer according to claim 8, **characterised in that** the spectrometer housing (34) is positioned with its side opposite the cover (34b) on a printed circuit board (33) which contains the entry aperture (31) and the photoelectric receiver arrangement (32), and is closed by said printed circuit board.

12. Spectral photometer according to claim 9, **characterised in that** the casing (34a) of the spectrometer housing (34) is equipped with positioning members (34d) which engage in complementary positioning members (33d) formed on the printed circuit board (33).

13. Spectral photometer according to one of claims 11 to 12, **characterised in that** a clamping spring (37) is provided, which at one side fixes the cover (34b) to the casing (34a) of the spectrometer housing (34) and at the other side holds the spectrometer housing (34) against the printed circuit board (33).

14. Spectral photometer according to one of claims 10 to 13, **characterised in that** it is athermalised.

15. Spectral photometer according to one of claims 10 to 13, **characterised in that** the spectrometer housing (34) and the diffraction grating (35) located therein consist of material having the same thermal expansion coefficient, so that relative movements caused by different thermal expansion can take place only between the spectrometer housing (34) as a whole and the printed circuit board (33).

16. Spectral photometer according to one of claims 8 to 11, **characterised in that** the entry aperture (31) and the photoelectric receiver arrangement (32) are arranged eccentrically on the same side outside the optical axis of the diffraction grating (35).

17. Spectral photometer according to one of claims 8 to 12, **characterised in that** an additional photoelectric receiver (38) is provided in the spectrometer housing (34) and is arranged in such a way that it is exposed to zero-order measurement light from the diffraction grating (35).

18. Spectral photometer according to one of claims 9 to 13, **characterised in that** the pickup arrangement (20) is mounted directly on that side of the printed circuit board (33) opposite the spectrometer housing (34).

19. Spectral photometer according to one of claims 8 to 14, **characterised in that** the spectrometer housing (34) and the diffraction grating (35) consist of the same plastic and are preferably produced by injection moulding.

20. Spectral photometer according to one of claims 2 to 19, **characterised in that** a further photoelectric receiver (50) is provided which is arranged in axial symmetry to the light source (11) relative to the main beam (21) of the pickup arrangement (20), which further photoelectric receiver receives light directly reflected by the measurement object at an angle of reflection of essentially 45°.

21. Spectral photometer according to one of claims 2 to 20, **characterised in that** a controller (110) is provided for keeping constant the temperature of the light source (11).

22. Spectral photometer according to claim 3 or 17, **characterised in that** the controller (110) determines, as an indication of the temperature of the light-emitting diode(s) contained in the light source (11), the forward voltage thereof at a constant measurement current which is much smaller than the normal operating current.

23. Spectral photometer according to claim 18, **characterised in that** the controller (110) controls the temperature of the light-emitting diodes by varying the on and off duration as a function of the determined forward voltage.

## Revendications

1. Tête de mesure pour un photomètre spectral, avec un dispositif d'éclairage (10) présentant une source lumineuse (11) de surface pour l'éclairage d'un objet à mesurer (O) se trouvant dans un plan de mesure (M) sous un angle d'incidence de sensiblement 45°, avec un dispositif de prélévement (20) pour intercepter la lumière de mesure réfléchie par l'objet à mesurer sous un angle de réflexion de sensiblement 0° par rapport à la perpendiculaire au plan de mesure, avec un dispositif de spectromètre (30) présentant une fente d'entrée (31) pour la décomposition spectrale de la lumière de mesure interceptée et qui lui est amenée par la fente d'entrée (31) et avec un dispositif récepteur (32) photoélectrique atteint par la lumière de mesure décomposée au plan spectral pour la conversion des parties spectrales individuelles de la lumière de mesure en signaux électriques appropriés, **caractérisée en ce que** la au moins une source lumineuse (11) de surface est conçue comme un émetteur cosinus et est disposée de telle sorte que la direction du rayonnement principal (12), perpendiculaire au plan de la source lumineuse (11) de surface, de l'émetteur cosinus (11) est parallèle au faisceau principal (21) de la lumière de mesure réfléchie et l'entraxe de l'émetteur cosinus (11) au faisceau principal de la lumière de mesure réfléchie est sensiblement égal à la distance (t) de l'émetteur cosinus (11) au plan médian (M).

2. Photomètre spectral avec une tête de mesure selon la revendication 1, qui présente également : un circuit électronique (100) qui commande la source lumineuse (11) et forme des valeurs mesurées numériques à partir des signaux électriques générés par le dispositif récepteur (32) photoélectrique.

3. Photomètre spectral selon la revendication 2, **caractérisé en ce que** la source lumineuse (11) comprend une combinaison de deux ou plus de deux diodes électroluminescentes (11a-d), disposées dans un plan et de préférence sur un support (13) commun, de différentes caractéristiques spectrales, le plan étant orienté sensiblement parallèlement au plan de mesure (M).

4. Photomètre spectral selon l'une des revendications 2 ou 3, **caractérisé en ce que** le dispositif de prélèvement (20) présente une lentille (22) et une barre d'intégrateur (23), la lentille donnant l'image d'un spot de mesure (MF) limité dans le plan de mesure (M) sur la surface d'entrée (23a) de la barre d'intégrateur (23) et la barre d'intégrateur intégrant la lumière de mesure par le spot de mesure (MF) et la dirigeant dans la fente d'entrée (31) du dispositif de spectromètre (30).

5. Photomètre spectral selon la revendication 4, **caractérisé en ce que** la lentille (22) et la barre d'intégrateur (23) sont réalisées d'une seule pièce.

6. Photomètre spectral selon l'une des revendications 2 à 5, **caractérisé en ce qu'**il présente un dispositif de référence claire (40) pouvant être introduit dans la trajectoire de faisceau entre le dispositif d'éclairage (10) et le dispositif de prélèvement (20), pouvant être enlevé à nouveau et se trouvant à une distance relativement grande du plan de mesure (M), qui réfléchit au moins une partie de la lumière d'éclairage dans le dispositif de prélèvement (20).

7. Photomètre spectral selon la revendication 6, **caractérisé en ce que** le dispositif de référence claire (40) est formé par des miroirs de déviation (45, 46) et au moins un élément d'affaiblissement (47).

8. Photomètre spectral selon la revendication 6, **caractérisé en ce que** le dispositif de référence claire (40) est formé par des surfaces à dispersion diffuse.

9. Photomètre spectral selon l'une des revendications 6 à 8, **caractérisé en ce que** le dispositif de référence claire (40) est conçu comme une fermeture.

10. Photomètre spectral selon l'une des revendications 2 à 9, **caractérisé en ce que** le dispositif de spectromètre (30) présente un boîtier de spectromètre (34) sensiblement en forme de pot avec une enveloppe (34a) sensiblement cylindrique et un couvercle (34b) amovible, **en ce qu'**un réseau de réfraction (35) concave est disposé de façon coaxiale par rapport à l'enveloppe (34a) dans le boîtier de spectromètre et repose sur un épaulement annulaire (34c) réalisé sur l'enveloppe (34a) et formé de préférence de façon complémentaire au réseau de diffraction, et **en ce que** le couvercle (34b) presse le réseau de diffraction (35) par un ressort de compression (36) avec une force définie contre l'épaulement annulaire (34c).

11. Photomètre spectral selon la revendication 8, **caractérisé en ce que** le boîtier de spectromètre (34) est positionné avec son côté opposé au couvercle (34b) sur une plaque d'impression (33) contenant la fente d'entrée (31) et contenant le dispositif récepteur (32) photoélectrique et est obturé par cette plaque.

12. Photomètre spectral selon la revendication 9, **caractérisé en ce que** l'enveloppe (34a) du boîtier de spectromètre (34) est équipée d'organes de positionnement (34d) qui s'engagent dans des organes de positionnement (33d) complémentaires réalisés sur la plaque d'impression (33).

13. Photomètre spectral selon l'une des revendications 11 à 12, **caractérisé en ce qu'**un ressort de tension (37) est prévu, lequel fixe d'une part le couvercle (34d) sur l'enveloppe (34a) du boîtier de spectromètre (34) et d'autre part maintient le boîtier de spectromètre (34) sur la plaque d'impression (33).

14. Photomètre spectral selon l'une des revendications 10 à 13, **caractérisé en ce qu'**il est athermalisé.

15. Photomètre spectral selon l'une des revendications 10 à 13, **caractérisé en ce que** le boîtier de spectromètre (34) et le réseau de diffraction (35) se trouvant à l'intérieur sont réalisés à base de matériau présentant le même coefficient de dilatation thermique, de sorte que des déplacements relatifs provoqués par une dilatation thermique différente ne peuvent intervenir qu'entre le boîtier de spectromètre (34) en tant que tout et la plaque d'impression (33).

16. Photomètre spectral selon l'une des revendications 8 à 11, **caractérisé en ce que** la fente d'entrée (31) et le dispositif récepteur (32) photoélectrique sont disposés de façon excentrée sur le même côté à l'extérieur de l'axe optique du réseau de diffraction (35).

17. Photomètre spectral selon l'une des revendications 8 à 12, **caractérisé en ce qu'**un récepteur (38) photoélectrique supplémentaire est prévu et disposé dans le boîtier de spectromètre (34) de telle sorte qu'il est atteint par le réseau de diffraction (35) avec lumière de mesure d'ordre zéro.

18. Photomètre spectral selon l'une des revendications 9 à 13, **caractérisé en ce que** le dispositif de prélèvement (20) est monté directement sur le côté, opposé au boîtier de spectromètre (34), de la plaque d'impression (33).

19. Photomètre spectral selon l'une des revendications 8 à 14, **caractérisé en ce que** le boîtier de spectromètre (34) et le réseau de diffraction (35) sont réalisés dans la même matière plastique et sont fabriqués de préférence par un procédé de moulage par injection.

20. Photomètre spectral selon l'une des revendications 2 à 19, **caractérisé en ce qu'**il est prévu un autre récepteur (50) photoélectrique, disposé en symétrie axiale de la source lumineuse (11) par rapport au faisceau principal (21) du dispositif de prélèvement (20), qui reçoit de la lumière directement réfléchie par l'objet à mesurer sous un angle d'incidence de sensiblement 45°.

21. Photomètre spectral selon l'une des revendications 2 à 20, **caractérisé en ce qu'**une régulation (110) pour maintenir constante la température de la source de lumière (11) est présente.

22. Photomètre spectral selon la revendication 3 ou 17, **caractérisé en ce que** la régulation (110) détermine comme critère de la température de la (des) diode(s) contenue(s) dans la source lumineuse (11) sa tension de passage avec un courant de mesure constant beaucoup plus faible par rapport au courant de service normal.

23. Photomètre spectral selon la revendication 18, **caractérisé en ce que** la régulation (110) règle la température des diodes électroluminescentes par variation de la durée de mise en circuit et de mise hors circuit en fonction de la tension de passage déterminée.
